# EUROPÄISCHE PATENTSCHRIFT

(11) **EP 1 586 427 B1**
(45) Veröffentlichungstag und Bekanntmachung des Hinweises auf die Patenterteilung: **12.11.2008**
(21) Anmeldenummer: 05007505.0
(22) Anmeldetag: 06.04.2005
(51) Int. Cl.: B23Q 39/02, B23P 23/00, B29C 65/78, B23P 21/00, B26D 1/38, B29C 65/00, B29C 65/02, B29C 65/48

(54) **Vorrichtung zum Stanzen und Schweissen oder Kleben von Werkstücken**
Apparatus for punching and welding or gluing of workpieces
Appareil pour le poinçonage et le soudage ou le collage de pièces à usiner

(30) Priorität: 13.04.2004 DE 102004018309
(43) Veröffentlichungstag der Anmeldung: 19.10.2005
(73) Patentinhaber: Maschinenfabrik Spaichingen GmbH, 78549 Spaichingen (DE)
(72) Erfinder: Braun, Hans-Dieter, 78665 Frittlingen (DE)
(74) Vertreter: Manitz, Finsterwald & Partner GbR

(56) Entgegenhaltungen:
- EP-A- 0 496 995
- CA-A1- 2 411 633
- DE-A1- 4 303 916
- DE-A1- 10 030 997
- GB-A- 1 583 950
- US-A1- 2004 118 897
- US-B1- 6 305 678
- US-B1- 6 409 438
- DATABASE WPI Week 198309 Derwent Publications Ltd., London, GB; AN 1983-D0334K XP002457275 & SU 921 787 B (SEVAST INSTR INST) 28. April 1982 (1982-04-28)

## Beschreibung

Die Erfindung betrifft eine Vorrichtung der im Oberbegriff des Anspruchs 1 angegebenen Gattung.

Vorrichtungen dieser Art, die auch als Stanz/Schweiß-Maschinen bezeichnet werden, finden vorzugsweise bei der Herstellung von aus Kunststoff gefertigten Stoßfängern für die Automobilindustrie Anwendung. Hier besteht z.B. die Aufgabe, in einem ersten Arbeitsgang die Stoßfänger durch Stanzen mit Löchern zu versehen. Danach sollen in einem zweiten Arbeitsgang Aufnahmeteile für verschiedene Zusatzgeräte in diese Löcher eingesetzt und durch Schweißen oder Kleben in diesen befestigt werden. Bei den Zusatzgeräten kann es sich z.B. um Parksensoren, Scheinwerfer-Reinigunganlagen, Anhänger-Zugvorrichtungen, Auspuffanlagen oder Zierleisten handeln. Die Löcher können je nach Fall aus runden, geschlossenen Löchern oder aus randoffenen Ausbrüchen mit jeweils vom Einzelfall abhängigen Querschnitten bestehen. Die Befestigung der Aufnahmeteile in den Löchern kann durch Ultraschall- oder Laserschweißen od. dgl. oder auch durch Kleben erfolgen.

Wegen der beiden zusammengehörenden Arbeitsgänge ist es üblich, kombinierte Stanz- und Schweiß- bzw. Klebvorrichtungen der eingangs bezeichneten Art vorzusehen. Diese sind so konstruiert, daß die Stoßfänger an einer Frontseite der Vorrichtung bzw. Maschine bei nach vom gefahrenem Schiebetisch manuell in die an diesem angebrachte Aufnahme eingelegt werden, worauf der Schiebetisch mit einem Motor od. dgl. zu einem Stanzbügel gefahren wird, der an einer Rückseite der Vorrichtung angeordnet ist, um dort zunächst die erforderlichen Löcher zu stanzen. Daran anschließend wird der Schiebetisch wieder zur Frontseite gefahren, um die erforderlichen Aufnahmeteile, die zuvor auf im Schweißraum angeordnete Zuführdorne aufgesteckt wurden, in die gestanzten Löcher einzulegen und danach in diesen zu befestigen.

Wegen des manuellen Einlegens der Stoßfänger in die Aufnahme und der Aufnahmeteile in dafür vorgesehene Dome od. dgl. an der Aufnahme ist es erwünscht, die Aufnahme in einer ergonomisch günstigen Höhe oberhalb des Bodens anzordnen. Insbesondere sollte die Aufnahme nicht zu hoch angeordnet sein, damit die Bedienungspersonen die Stoßfänger oder andere große Werkstücke nicht bis in eine nur unbequem erreichbare Position anheben müssen.

Einer derart günstigen ergonomischen Höhenlage der Aufnahme wirkt der Umstand entgegen, daß es sich bei Stoßfängern meistens um Teile mit U-förmigen Querschnitten handelt, die bei nach unten weisender U-Öffnung in die Aufnahme eingelegt werden. Daher müssen die Schweiß- oder Klebwerkzeuge, bevor der Schiebetisch zur Stanzstation gefahren werden kann, nach unten aus dem U-förmigen Raum des in die Aufnahme eingelegten Stoßfängers herausgezogen werden. Daran anschließend kann der Schiebetisch zur Stanzstation gefahren werden. Da sich der Schiebetisch auf einer im wesentlichen horizontalen Bahn bewegt, muß sich die Matrize des Stanzbügels dabei in einer abgesenkten Stellung befinden, damit sie von der die U-Form bildenden vorderen Seitenwand des Stoßfängers passiert werden kann. Danach muß der Stanzbügel angehoben werden, um die Matrize von unten her an die Unterseite des Stoßfängers anzulegen und diesen dadurch beim Stanzvorgang abzustützen. Da die Stanzachsen außerdem üblicherweise radial zu den gewölbten Oberflächen des Stoßfängers angeordnet sind und die Bewegungsachsen für die Stanzbügel daher in unterschiedlichen Raumwinkeln liegen, wird bei einer Mehrzahl von zu stanzenden Löchern für jeden Stanzbügel eine eigene Hubvorrichtung zur Ausführung der beschriebenen Bewegungen benötigt. Dabei muß die Hublänge mindestens so groß sein, wie der Höhe der Seitenwandungen der Stoßfänger entspricht, so daß hierfür genügend Platz gelassen werden muß. Ähnliche Verhältnisse ergeben sich danach an der Vorderseite der Vorrichtung in der Schweiß/Klebstation, da hier alle zum Schweißen bzw. Kleben benötigten Werkzeuge ebenfalls zunächst von unten her an die Stoßfänger herangeführt und nach Beendigung des Schweiß- oder Klebvorgangs wieder aus der Bahn der Stoßfänger herausgefahren werden müssen.

Als Folge dieser Gegebenheiten ist es bisher erforderlich, die Aufnahmen für die Stoßfänger in einer bestimmten Mindesthöhe anzuordnen, die nicht immer mit der für die Bedienungspersonen ergonomisch günstigsten Einlegehöhe für die Stoßfänger bzw. Aufnahmeteile übereinstimmt.

Ausgehend davon liegt der Erfindung das technische Problem zugrunde, die Vorrichtung der eingang bezeichneten Gattung so auszubilden, daß die Höhenlage der Aufnahme im wesentlichen unabhängig von der Form der Stoßfänger und der Maschinengeometrie gewählt und so festgelegt werden kann, daß sich ergonomisch günstige Verhältnisse ergeben.

Zur Lösung dieser Aufgabe dienen die Merkmale des Anspruchs 1.

Die Erfindung bringt vor allem den Vorteil mit sich, daß die Höheinstellungen zum richtigen Einlegen der Werkstücke sowohl in den Stanzbügel als auch in die Schweiß-oder Klebstation mit Hilfe einer am Schiebetisch mitgeführten, das Heben und Senken der Aufnahme bewirkenden Hubvorrichtung durchführbar sind. Die Werkstücke und Aufnahmeteile können daher bei Bedarf in einer vergleichsweise niedrigen Höhenlage der Aufnahme eingelegt werden. Vorteilhaft ist ferner, daß die Stanzbügel und die Schweiß- oder Klebwerkzeuge stationär angeordnet werden können, während alle erforderlichen Bewegungen von der Aufnahme und den daran befestigten Werkstücken durchgeführt werden, ausgenommen natürlich die Bewegungen, die durch die Arbeitshübe des Stanzstempels bzw. der Schweiß/Klebwerkzeuge entstehen. Die zu bewegenden Massen sind daher erheblich kleiner. Eine Folge davon sind ferner erhebliche Kosteneinsparungen, da insbesondere die Stanzbügel, das sie aufnehmende Gestell und die zur Positionierung der Schweiß/Klebwerkzeuge benötigten Teile wesentlich einfacher als bisher ausgebildet werden können. Außerdem kann die gesamte Vorrichtung erheblich kürzer als bisher gebaut werden.

Weitere vorteilhafte Merkmale der Erfindung ergeben sich aus den Unteransprüchen.

Die Erfindung wird nachfolgend am Beispiel einer zum Stanzen und Schweißen von Stoßfängern bestimmten Vorrichtung in Verbindung mit den beiliegenden Zeichnungen näher erläutert. Darin zeigen:
Fig. 1 eine bekannte Vorrichtung zum Stanzen und Schweißen von Werkstücken in einer schematischen und perspektivischen Gesamtansicht;
Fig. 2 eine vergrößerte und perspektivische Ansicht einer erfindungsgemäß ausgebildeten Stanzstation für die Vorrichtung nach Fig. 1; und
Fig. 3 eine Seitenansicht der Stanzstation nach Fig. 2 schräg von der Seite und von hinten.

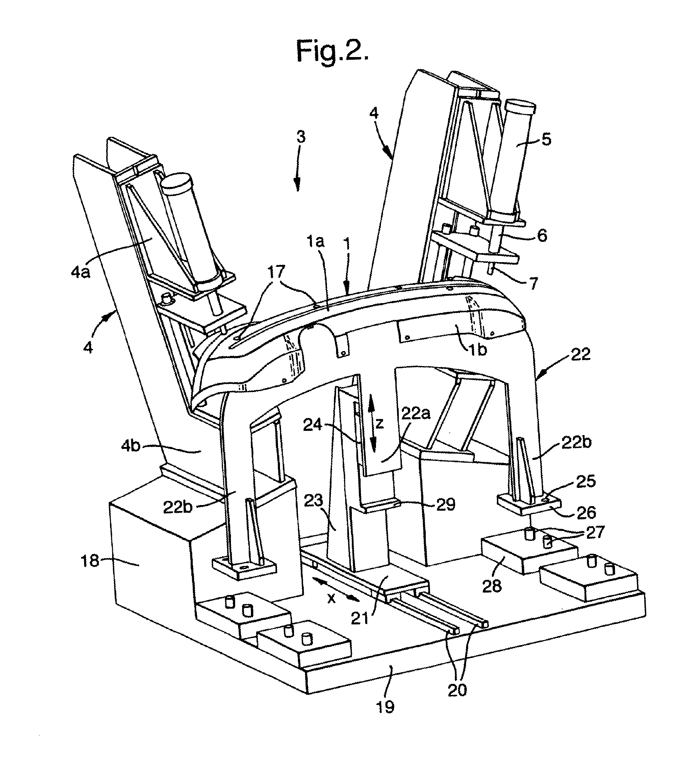

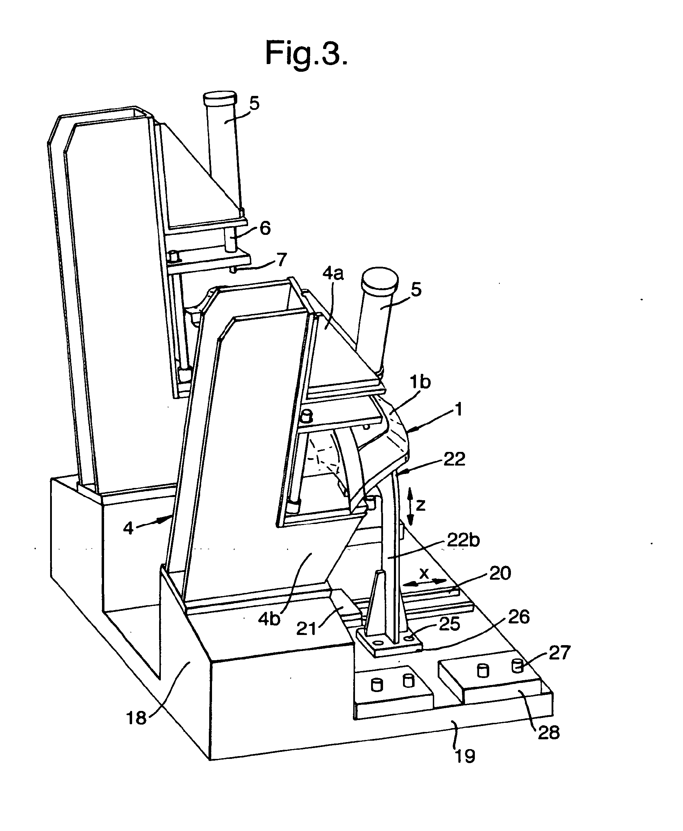

Eine Vorrichtung zum Stanzen und Schweißen dient im Ausführungsbeispiel zur Behandlung von Werkstücken 1 in Form von Stoßfängern für Kraftfahrzeuge. Die Stoßfänger besitzen, wie insbesondere Fig. 2 und 3 zeigen, im Querschnitt betrachtet eine U-förmige Kontur, die durch einen mittleren Längssteg 1a und von diesem abstehenden Seitenwänden 1b gebildet wird. Abgesehen davon bestitzt das Werkstück 1 die für Stoßfänger von Kraftfahrzeugen charakteristische, gewölbte Form. Die Vorrichtung enthält ein zumindest von einer Frontseite her zugängliches Gestell 2. An einer Rückseite des Gestells 2 ist eine Stanzstation 3 vorgesehen. Diese weist insbesondere einen meistens C-förmigen Stanzbügel 4 auf, der an einem oberen Steg 4a einen vorzugsweise pneumatisch betätigbaren Zylinder 5 trägt, dessen Kolbenstange 6 (Fig. 2) an ihrem unteren Ende mit einem Stanzstempel 7 versehen ist. Auf einer dem Steg 4a und den Stanzstempel 7 gegenüber liegenden Seite weist der Stanzbügel 4 einen unteren Steg 4b auf, an dem eine übliche, schematisch angedeutete Matrize 8 ausgebildet ist, die beim Stanzvorgang von innen her an der Unterseite des Werkstücks 1 anliegt und dem Stanzstempel 7 gegenüber steht.

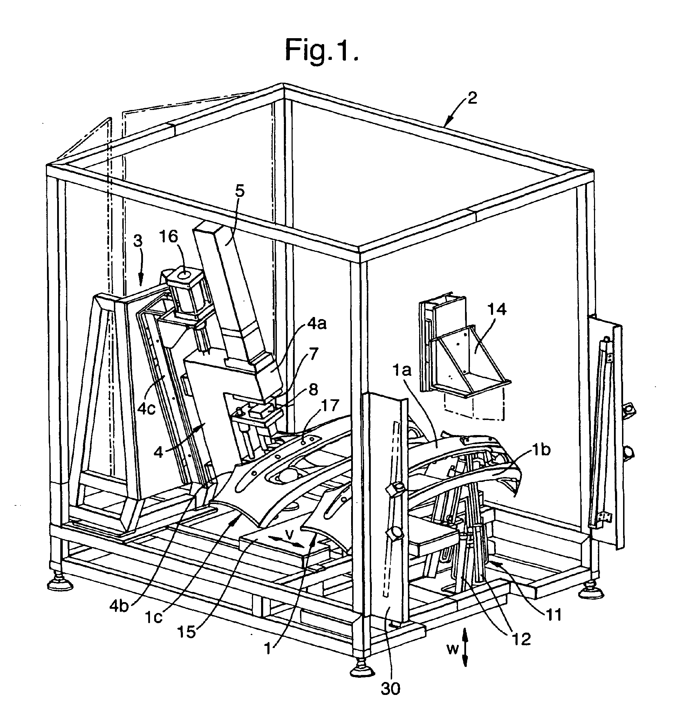

In Fig. 1 ist der besseren Übersicht wegen nur ein Stanzbügel 4 dargestellt. Tatsächlich sind in der Stanzstation 3 jedoch meistens wenigstens zwei, oftmals aber auch mehr als zwei derartige Stanzbügel 4 vorhanden, die sich nur dadurch voneinander unterscheiden, daß ihre durch die Hubbewegung der Kolbenstangen 6 festgelegten Stanzachsen, die radial zur Wölbung der Werkstücke 1 liegen, mit unterschiedlichen Raumwinkeln angeordnet sind.

An der Frontseite der Vorrichtung ist eine Schweißstation 11 angeordnet, die eine Mehrzahl von Schweißwerkzeugen 12 aufweist. Beim Ausführungsbeispiel ist die Schweißstation 11 als Ultraschall-Schweißvorrichtung ausgebildet und dazu mit Schweißwerkzeugen 12 in Form von nicht näher dargestellten Schwinggebilden versehen, die je einen elektromechanischen, vorzugsweise piezoelektrischen Konverter und eine mit diesem verbundene Sonotrode aufweisen, wie an sich bekannt ist (z.B. DE 100 46 451 A1). Die Schwinggebilde sind außerdem mit einer oder mehreren Vorschubeinrichtungen gekoppelt, mittels derer die Sonotroden von unter her an die Unterseite der Werkstücke 1 herangefahren werden können, um einen Schweißvorgang durchzuführen. Außerdem kann ein Amboss 14 vorgesehen sein, der vertikal beweglich angeordnet ist.

In einem mittleren Teil des Gestells 2 ist ein Schiebetisch 15 vorgesehen. Dieser ist zwischen der Stanzstation 3 und der Schweißstation 11 angeordnet und in Richtung eines Doppelpfeils v zwischen diesen beiden Stationen 3, 11 hin- und herfahrbar. Als Antrieb dient dabei z.B. ein Elektromotor, eine Zylinder/Kolben-Anordnung oder eine sonstige Antriebeinrichtung. An dem Schiebetisch 15 ist eine nicht näher dargestellte Aufnahme angebracht, an der je ein Werkstück 1 fest und unverschiebbar festgelegt werden kann.

Die Arbeitsweise der beschriebenen bekannten Vorrichtung ist im wesentlichen wie folgt:

Zu Beginn eines Bearbeitsvorgangs wird der Schiebetisch 15 mit Hilfe des ihm zugeordneten Antriebs in Richtung des Pfeils v an die Frontseite des Gestells 2, d.h. in die Schweißstation 11 gefahren. Die Bedienungsperson legt dann eine Werkstück 1 auf die Aufnahme auf und befestigt diese auf ihr. Danach müssen die Schweißwerkzeuge 12 mittels einer nicht näher dargestellten Hubvorrichtung in Richtung eines Doppelpfeils w nach unten aus dem Wirkungsbereich der Seitenwände 1b des Werkstücks 1 herausgefahren werden. Im Anschluß daran wird das Werkstück 1 mit dem Schiebetisch 15 zur Stanzstation 3 in eine Position 1c bewegt. Zu diesem Zeitpunkt muß sich der Stanzbügel 4, der in einer an der Rückseite des Gestells 2 angeordneten Schiebeführung 4c vertikal verschiebbar gelagert ist und mittels eines Hubzylinders 16 auf- und abbewegt werden kann, in einer abgesenkten Stellung befinden, damit das Werkstück aus der Position 1c heraus frei in den Raum zwischen der Matrize 8 und dem Stanzstempel 7 eintreten kann. Anschließend wird der Stanzbügel 4 mit dem Hubzylinder 16 angehoben, wodurch die Matrize 8 an die Unterseite des Werkstücks 1 angelegt wird, so daß jetzt der Stanzvorgang unter Bildung von Löchern 17 im Werkstück 1 erfolgen kann.

Nach Beendigung des Stanzvorgangs wird der Stanzbügel 4 wieder abgesenkt, der Schiebetisch 15 zurück zur Schweißstation 12 bewegt und das Werkstück 1 dort mit seinem nach unten offenen, U-förmigen Raum über den noch abgesenkten Schweißwerkzeugen 12 angeordnet.

Die in die Stanzlöcher 17 einzulegenden, nicht dargestellten Aufnahmeteile wurden vor dem Einlegen des Werkstücks 1 in die Aufnahme auf nicht dargestellte Zuführdome aufgesteckt, die z. B. in Aussparungen der Werkstück-Aufnahme untergebracht sind. Diese Zuführdorne werden nun vorgeschoben, um die Aufnahmeteile in die Löcher 17 einzuführen, und gleichzeitig damit wird der Amboss 14 nach unten bewegt. Anschließend werden die Schweißwerkzeuge 12 in Richtung des Doppelpfeils w nach oben bewegt, um die Aufnahmeteile durch Schweißen mit dem Werkstück 1 zu verbinden. Im Anschluß daran wird das fertige Werkstück 1 von der Aufnahme abgehoben und durch ein noch zu bearbeitendes Werkstück ersetzt, worauf sich die beschriebenen Vorgänge wiederholen.

In Fig. 2 und 3 sind wesentliche Teile einer erfindungsgemäßen Vorrichtung zum Stanzen und Schweißen der Werkstücke 1 gezeigt, wobei gleiche Teile mit denselben Bezugszeichen wie in Fig. 1 versehen sind.

Ein wesentlicher Unterschied zu Fig. 1 besteht zunächst darin, daß die Stanzbügel 4 bei der erfindungsgemäßen Vorrichtung sämtlich stationär angeordnet und beispielsweise auf im hinteren Bereich des Gestells 2 angeordneten Stützen 18 abgestützt sind, die an einer Grundplatte 19 des Gestells vorgesehen sind. Weiter ist, wie Fig. 2 und 3 zeigen, in einem mittleren Teil der Grundplatte 19 eine Führung 20 für einen Schiebetisch 21 vorgesehen. Dieser ist zwischen der Stanzstation 3 und einer nicht gezeigten Schweißstation angeordnet und in Richtung eines Doppelpfeils x zwischen diesen beiden Stationen hin- und herfahrbar. Als Antrieb dient dabei z.B. wiederum ein Elektromotor, eine Zylinder/Kolben-Anordnung oder eine sonstige Antriebeinrichtung. An dem Schiebetisch 21 ist eine Aufnahme 22 (Fig. 2) angebracht, die vorzugsweise an der Oberseite einer auf dem Schiebetisch 21 montierten, z.B. vertikal angeordneten Säule 23 befestigt und zweckmäßig lösbar mit dieser verbunden ist, um an unterschiedliche Werkstücke 1 angepaßte Aufnahmen 22 auf dem Schiebetisch 21 montieren zu können. Die Säule 23 ist vorzugsweise in einem mittleren Teil der Aufnahme 22 bzw. des Schiebetischs 21 angebracht, damit sie bei der noch zu beschreibenden Arbeitsweise der Vorrichtung nicht mit den Stanz- bzw. Schweißwerkzeugen 7, 12 (Fig. 1) kollidieren kann. Im übrigen ist die Aufnahme 22 mit nicht dargestellten Schnellverschlüssen, Vakuumsaugern od. dgl. versehen, mittels derer je ein Werkstück 1 fest und unverschiebbar auf ihr festgelegt werden kann. Außerdem ist die Form der Aufnahme 22 zweckmäßig an die Form der Werkstücke 1 angepaßt.

Die Aufnahme 22 ist erfmdungsgemäß vertikal verschiebbar bzw. heb- und senkbar am Schiebetisch 21 montiert und in Richtung eines Doppelpfeils z (Fig. 2) relativ zu diesem bewegbar. Zu diesem Zweck weist die Aufnahme 22 zweckmäßig einen nach unten ragenden, mittleren Steg 22a auf, der an einer in Richtung des Pfeils z verschiebbar in der Säule 23 gelagerten Halterung 24 befestigt ist. Zur Verschiebung der Halterung 24 an der Säule 23 dient eine nicht näher dargestellte Hubvorrichtung, die eine pneumatische oder hydraulische Zylinder/Kolben-Anordnung, einen Elektromotor oder einen sonstigen Antrieb enthalten kann. Die Bewegungsrichtung der Halterung 24 ist zweckmäßig quer zu der des Schiebetischs 21 und vorzugsweise im wesentlichen vertikal, wenn der Schiebetisch 21 horizontal bewegbar ist.

Die Aufnahme 22 ist an ihren Seiten bzw. beidseitig des Schiebetischs 21 vorzugsweise mit Beinen 22b versehen, die an ihren unteren Enden Ausricht- bzw. Zentrierelemente 25 in Form von Löchern aufweisen, die in quer zu den Beinen 22b angeordneten Platten 26 ausgebildet sind. Diese Ausrichtelemente 25 wirken mit Ausrichtelementen 27 in Form von Paßstiften zusammen, die von Platten 28 senkrecht abstehen, die an der Grundplatte 19 befestigt werden. Dabei ist vorzugsweise wenigstens je eine solche Platte 28 in der Stanzstation 3 und in der Schweißstation 11 derart angeordnet, daß sie eine vorgegebene Lage der Aufnahme 22 festlegt, wenn deren Beine 22b in der jeweiligen Station abgesenkt und die Ausrichtelemente 25 auf die Ausrichtelemente 27 aufgeschoben sind.

Die Arbeitsweise der erfindungsgemäßen Vorrichtung ist im wesentlichen wie folgt:

Zunächst wird der Schiebetisch 21 wie bei der bekannten Vorrichtung im Bereich der Schweißstation (11 in Fig. 1) angeordnet, um ein Werkstück 1 in die Aufnahme 22 einzulegen. Dabei kann die Bedienungsperson die Aufnahme 22 mittels des der Halterung 24 zugeordneten Antriebs in Richtung des Pfeils z soweit absenken, wie die stationären Schweißwerkzeuge 12 (Fig. 1) dies zulassen. Da diese nur den üblichen Arbeitshub durchführen brauchen und bei der Abwärtsbewegung in den Innenraum des U-förmigen Werkstücks 1 eintreten, können sie sehr niedrig über dem Boden angeordnet werden, so daß die Aufnahme 22 in eine tief liegende, für das Befestigen des Werkstücks 1 günstige Lage gebracht werden kann.

Nach Befestigung des Werkstücks 1 wird die Aufnahme 22 mittels der Halterung 24 so weit angehoben, bis die Schweißwerkzeuge 12 frei stehen und das Werkstück 1 mit dem Schiebetisch 21 in Richtung des Pfeils x zur Stanzstation 3 gefahren werden kann, ohne mit den Schweißwerkzeugen 12 zu kollidieren. In der Stanzstation 3 ist die Matrize 8 (Fig. 1) in einer entsprechend niedrigen Position angeordnet, so daß sie bei angehobener Aufnahme 22 von den Seitenwänden 1b der Werkstücke 1 kollisionsfrei überfahren werden kann, bis sie in der Mitte des U-förmigen Raums des Werkstücks 1 angeordnet ist. Anschließend wird dieses durch Absenken der Halterung 24 (Pfeil z) so tief abgesenkt, bis es mit seiner Unterseite auf der Matrize 8 aufliegt.

In weiteren Verlauf wird jetzt mit einem oder mehreren Stanzstempeln 7 durch Betätigung des entsprechenden Stanzzylinders 5 eine Stanzung durchgeführt, um das Werkstück 1 mit wenigstens einem der Löcher 17 zu versehen.

Nach Beendigung des Stanzprozesses werden die beschriebenen Bewegungen in umgekehrter Reihenfolge durchgeführt. Insbesondere wird die Aufnahme 22 angehoben, bis die Matrize 8 frei steht, dann der Schiebetisch 21 in die Schweißstation 11 gefahren und schließlich die Aufnahme 22 wieder abgesenkt, bis ihre Unterseite den Schweißwerkzeugen 12 (Fig. 1) dicht gegenüber steht. Mittels nicht gezeigter Aufnahmedorne werden nun geeignete Aufnahmeteile in die zuvor gestanzten Löcher 17 eingeführt und der Amboss 14 auf die Oberseite des Werkstücks 1 aufgelegt. Anschließend erfolgt der Schweißvorgang, indem die Sonotroden od. dgl. mit ihrem Arbeitshub von unten gegen das Werkstück 1 gedrückt werden.

Nach Beendigung des Schweißvorgangs wird das fertige Werkstück 1 bei noch abgesenkter Aufnahme 22 entnommen und ein neues Werkstück 1 auf die Aufnahme 22 aufgelegt, worauf sich die beschriebenen Arbeitsschritte wiederholen.

Die Ausrichtelemente 25, 27 (Fig. 2 und 3) sind relativ zueinander so positioniert, daß sie, sobald der Schiebetisch 21 seine richtige Position in der Stanz- bzw. Schweißstation erreicht hat, beim Absenken der Halterung 24 bzw. der Aufnahme 22 automatisch in Eingriff gelangen. Dadurch wird die für den Stanz- bzw. Schweißvorgang vorgegebene Sollposition lagegenau und mit einer hohen Wiederholbarkeit festgelegt, zentriert und gesichert. Die auf diese Weise erreichte Positionierung der Aufnahme 22 bzw. des auf ihr befindlichen Werkstücks 1 ermöglicht vergleichsweise ungenaue bzw. mit großen Toleranzen erfolgende Verschiebe- und Hubbewegungen während der beschriebenen Bewegungsphasen.

Die Bearbeitungshöhe in den Stationen 3 und 11 kann bei der erfindungsgemäßen Vorrichtung unterschiedlich sein. Wenn z.B. im Stanzraum wegen der Bauhöhe der Stanzwerkzeuge 12 das Werkstück 1 höher liegen muß, als der Einlegehöhe in der Schweißstation 11 entspricht, kann dieses durch Anheben der Aufnahme 22 ohne weiteres ausgeglichen werden. Dabei ist es möglich, die in der Stanzstation 3 anzubringenden Platten 28 in einer größeren Höhe des Maschinengestells 2 als im Bereich der Schweißstation 11 anzuordnen, um dadurch einen der Hubbegrenzung für die Halterung 24 dienenden Anschlag 29 (Fig. 2) höher zu legen, insbesondere wenn das Heben und Senken der Halterung 24 mittels eines pneumatischen Zylinders od. dgl. erfolgt.

Ein besonderer Vorteil der erfindungsgemäßen Vorrichtung besteht darin, daß anstelle der sonst für die Stanzbügel 4 und die Schweißwerkzeuge 12 benötigten Hubeinrichtungen nur noch eine einzige, mit dem Schiebetisch 21 mitgeführte Hubeinrichtung für die Aufnahme 22 benötigt wird. Dadurch werden die erforderlichen Bauräume sowie das Gewicht und der Materialverbrauch für die Vorrichtung erheblich reduziert, was auch für die diesbezüglichen Kosten gilt.

Die Erfindung ist nicht auf das beschriebene Ausführungsbeispiel beschränkt, das auf vielfache Weise abgewandelt werden kann. Zunächst ist klar, daß die Vorrichtung in entsprechender Weise konstruiert werden kann, wenn die Verbindung der Aufnahmeteile mit den Stoßfängern od. dgl. durch Kleben anstatt durch Schweißen erfolgt. Außerdem können mit der beschriebenen Vorrichtung natürlich auch andere Werkstücke als Stoßfänger gestanzt und durch Schweißen/Kleben mit irgendwelchen Ausrüstungsteilen verbunden werden. Weiter können die beschriebenen Hubvorrichtungen für den Schiebetisch 21 und die Halterung 24 auch anders als beschrieben ausgebildet sein. Für die Halterung 24 wird dabei vorzugsweise eine Hubvorrichtung vorgesehen, deren Hub wenigstens etwa 200 mm bis 400 mm beträgt bzw. wenigstens der Tiefe der U-förmigen Kontur der Stoßfänger oder anderer innerer Konturen der Werkstücke entspricht, damit die Vorrichtung für die Tiefenabmessungen der Hohlräume aller hier interessierenden Werkstücke geeignet ist. Weiter wurde die erfindungsgemäße Vorrichtung nur schematisch und unter Weglassung der üblichen Bedienungselemente wie Schaltern, Betätigungsknöpfen od. dgl. sowie erforderlicher Sicherheitsvorkehrungen wie z.B. Lichtvorhängen 30 (Fig. 1) beschrieben, da diese Teile an sich bekannt sind. Schließlich versteht sich, daß die verschiedenen Merkmale auch in anderen als den beschriebenen und dargestellten Kombinationen angewendet werden können.

## Patentansprüche

1. Vorrichtung zum Stanzen und Schweißen oder Kleben von Werkstücken (1), insbesondere Kunststoffteilen für Kraftfahrzeuge, enthaltend eine Stanzstation (3) mit wenigstens einem Stanzbügel (4), an dem eine Matrize (8) und ein Stanzstempel (7) vorgesehen sind, eine wenigstens ein Schweiß- oder Klebwerkzeug aufweisende Schweiß- oder Klebstation (11) und einen zwischen der Stanzstation (3) und der Schweiß- oder Klebstation (11) hin- und herfahrbaren Schiebetisch (21), an dem eine zur festen Auflage der Werkstücke (1) bestimmte Aufnahme (22) angebracht ist, **dadurch gekennzeichnet, daß** der Stanzbügel (4) stationär angeordnet und die Aufnahme (22) an einer Halterung (24) befestigt ist, die quer zur Bewegungsrichtung (x) des Schiebetischs (21) anhebbar und absenkbar an diesem montiert ist.

2. Vorrichtung nach Anspruch 1, **dadurch gekennzeichnet, daß** die Schweiß- oder Klebwerkzeuge (12) bis auf notwendige Arbeitshübe stationär in der Schweiß- oder Klebstation (11) angeordnet sind.

3. Vorrichtung nach Anspruch 1 oder 2, **dadurch gekennzeichnet, daß** die Aufnahme (22) lösbar an der Halterung (24) befestigt ist.

4. Vorrichtung nach einem der Ansprüche 1 bis 3, **dadurch gekennzeichnet, daß** die Aufnahme (22) mit einem wenigstens etwa 200 mm betragenden Bewegungshub heb-und senkbar gelagert ist, der wenigstens der Tiefe von inneren Konturen der Werkstücke entspricht.

5. Vorrichtung nach einem der Ansprüche 1 bis 4, **dadurch gekennzeichnet, daß** die Aufnahme (22) mit Beinen (22b) versehen ist und an unteren Enden der Beine (22b) Ausrichtelemente (25) vorgesehen sind, die mit auf einer Grundplatte (19) zu befestigenden Ausrichtelementen (27) zusammen wirken.

6. Vorrichtung nach Anspruch 5, **dadurch gekennzeichnet, daß** die Ausrichtelemente (25) an den Beinen (22b) aus Löchern und die Ausrichtelemente (27) an der Grundplatte (19) aus in die Löcher eintretenden Paßstiften bestehen.

7. Vorrichtung nach Anspruch 5 oder 6, **dadurch gekennzeichnet, daß** an der Grundplatte (19) Ausrichtelemente (27) befestigbar sind, die die zum Stanzen erforderliche Lage der Aufnahme (22) in der Stanzstation (3) festlegen.

8. Vorrichtung nach einem der Ansprüche 5 bis 7, **dadurch gekennzeichnet, daß** an der Grundplatte (19) Ausrichtelemente (27) befestigbar sind, die die zum Schweißen bzw. Kleben erforderliche Lage der Aufnahme (22) in der Schweiß- bzw. Klebestation (11) festlegen.

## Claims

1. An apparatus for punching and welding or bonding workpieces (1), in particular plastic parts for motor vehicles, comprising a punching station (3) having at least one punching yoke (4) at which a die (8) and a punch (7) are provided; a welding or bonding station (11) having at least one welding or bonding tool, and a shuttle table (21) able to be moved to and fro between said punching station (3) and said welding or bonding station (11), with a mount (22) designed for the fixed support of the workpieces (1) being attached to said shuttle table, **characterized in that** the punching yoke (4) is arranged in a stationary manner and the mount (22) is fastened to a holder (24) which is mounted on said shuttle table (21) and is raisable and lowerable transversely to the direction of movement (x) thereof.

2. An apparatus according to claim 1, **characterized in that,** except for required working strokes, said welding or bonding tools (12) are arranged stationary in the welding or bonding station (11).

3. An apparatus according to claim 1, **characterized in that** said mount (22) is releasably fastened to said holder (24).

4. An apparatus according to any one of the claims 1 to 3, **characterized in that** said mount (22) is supported raisably and lowerably with a stroke of movement amounting to at least approximately 200 mm which corresponds to at least the depth of inner contours of said workpieces.

5. An apparatus according to any one of the claims 1 to 4, **characterized in that** said mount (22) is provided with legs (22b); and **in that** aligning elements (25) are provided at bottom ends of said legs (22b) and cooperate with aligning elements (27) to be fastened to a base plate (19).

6. An apparatus according to claim 5, **characterized in that** said aligning elements (25) on said legs (22b) comprise holes and said aligning elements (27) on said base plate (19) comprise dowel pins which enter said holes.

7. An apparatus according to claim 5 or claim 6, **characterized in that** aligning elements (27) can be fastened to said base plate (19) and define the position of the mount (22) required for punching in said punching station (3).

8. An apparatus according to any one of the claims 5 to 7, **characterized in that** aligning elements (27) can be fastened to said base plate (19) and define the position of said mount (22) in said welding and bonding station (11) required for welding and/or bonding.

## Revendications

1. Dispositif pour poinçonner et souder ou coller des pièces à oeuvrer (1), en particulier des pièces en matière plastique pour véhicules automobiles, comportant une station de poinçonnage (3) avec au moins un étrier de poinçonnage (4) sur lequel sont prévus une matrice (8) et un poinçon (7), une station de soudage ou de collage (11) présentant au moins un outil de soudage ou de collage et une table coulissante (21) déplaçable en va-et-vient entre la station de poinçonnage (3) et la station de soudage ou de collage (11), table sur laquelle est monté un logement (22) destiné à la pose fixe des pièces à oeuvrer (1), **caractérisé en ce que** l'étrier de poinçonnage (4) est agencé de façon stationnaire et le logement (22) est fixé sur un support (24) qui est monté sur la table coulissante de manière à pouvoir être soulevé et abaissé transversalement à la direction de mouvement (x) de la table (21).

2. Dispositif selon la revendication 1, **caractérisé en ce que** les outils de soudage ou de collage (12) sont agencés de manière stationnaire sur la station de soudage ou de collage (11) excepté les courses de travail nécessaires.

3. Dispositif selon la revendication 1 ou 2, **caractérisé en ce que** le logement (22) est fixé de manière détachable sur le support (24).

4. Dispositif selon l'une des revendications 1 à 3, **caractérisé en ce que** le logement (22) est monté de manière à pouvoir être soulevé et abaissé avec une course de mouvement d'au moins approximativement 200 mm, laquelle correspond au moins à la profondeur des contours intérieurs des pièces à oeuvrer.

5. Dispositif selon l'une des revendications 1 à 4, **caractérisé en ce que** le logement (22) est pourvu de jambes (22b) et aux extrémités inférieures des jambes (22b) sont prévus des éléments d'alignement (25) qui coopèrent avec des éléments d'alignement (27) à fixer sur une plaque de base (19).

6. Dispositif selon la revendication 5, **caractérisé en ce que** les éléments d'alignement (25) sur les jambes (22b) sont constitués par des trous, et les éléments d'alignement (27) sur la plaque de base (19) sont constitués par des goupilles d'assemblage entrant dans les trous.

7. Dispositif selon la revendication 5 ou 6, **caractérisé en ce que** sur la plaque de base (19) peuvent être fixés des éléments d'alignement qui immobilisent la position du logement (22) dans la station de poinçonnage (3), qui est nécessaire au poinçonnage.

8. Dispositif selon l'une des revendications 5 à 7, **caractérisé en ce que** sur la plaque de base (19) peuvent être fixés des éléments d'alignement (27) qui immobilisent la position du logement (22) dans la station de soudage ou de collage (11), qui est nécessaire au soudage ou au collage.
